# EUROPÄISCHE PATENTANMELDUNG

(11) **EP 4 102 101 A1**
(43) Veröffentlichungstag der Anmeldung: **14.12.2022**
(21) Anmeldenummer: 22171820.8
(22) Anmeldetag: 05.05.2022
(51) Int. Cl.: F16G 11/10

(54) **VORRICHTUNG ZUM LÖSEN EINER MIT EINER ZUGKRAFT BELASTETEN SEILVERBINDUNG**

(30) Priorität: 07.06.2021 AT 504572021
(71) Anmelder: Ferner, Reinhard, 8822 Mühlen (AT)
(72) Erfinder: Ferner, Reinhard, 8822 Mühlen (AT)
(74) Vertreter: Schwarz & Partner Patentanwälte GmbH

(57) **Zusammenfassung**

Vorrichtung (1) zum Lösen einer mit einer Zugkraft belasteten Seilverbindung (2), umfassend einen Betätigungskörper (3) und einen Sperrkörper (4), wobei der Betätigungskörper (3) entlang des Sperrkörpers (4) zwischen einem geschlossenen Zustand und einem offenen Zustand der Vorrichtung (1) verschiebbar ist, und der Sperrkörper (4) ein Klemmelement (5) umfasst, und zwischen dem Klemmelement (5) und dem Betätigungskörper (3) ein Klemmbereich (6) zur Aufnahme eines ersten Seilendes (7) der Seilverbindung (2) ausgebildet ist, und der Klemmbereich (6) im geschlossenen Zustand kleiner als in dem offenen Zustand ist, wobei der Sperrkörper (4) dazu ausgebildet ist, im geschlossenen Zustand der Vorrichtung (1) die Zugkraft der Seilverbindung (2) aufzunehmen, und der Betätigungskörper (3) entlang des Sperrkörpers (4) zwischen dem geschlossenen Zustand und dem offenen Zustand der Vorrichtung (1) frei von der Zugkraft der Seilverbindung (2) gleitet.

## Beschreibung

Die Erfindung betrifft eine Vorrichtung zum Lösen einer mit einer Zugkraft belasteten Seilverbindung.

Mittels Seilen hergestellte Seilverbindungen können vielseitig zum Transport von Lasten benutzt werden, und bieten den Vorteil einer flexiblen Verbindung, die einfach herzustellen und auch wieder zu lösen ist. Seilverbindungen werden herkömmlicherweise mit Befestigungsmechanismen hergestellt, welche beispielsweise Seilschlingen, Ösen und Seilknoten umfassen. Wird eine Seilverbindung belastet, entsteht eine Zugkraft, welche von dem Seil aufgenommen wird, und welche auch auf den eingesetzten Befestigungsmechanismus wirkt. Hierdurch wird ein Lösen der Seilverbindung erschwert, da beim Lösen Reibungskräfte und/oder Zugkräfte überwunden werden müssen, welche durch die Belastung der Seilverbindung entstehen. Je stärker die Zugkraft ist, welche auf die Seilverbindung wirkt, desto mehr Kraft muss in der Regel auch für das Lösen der mit der Zugkraft belasteten Seilverbindung aufgewendet werden.

Insbesondere auf dem Gebiet des Personentransports ist ein Lösen von mit einer Zugkraft belasteten Seilverbindungen von Interesse. Beispielsweise können an Personenliften Seilverbindungen eingesetzt werden, um eine Rodel mit einer darauf befindlichen Person, oder ein Fahrrad mit einer darauf befindlichen Person zu transportieren. Hierbei wird die Rodel oder das Fahrrad mittels einer Seilverbindung an einer Zugvorrichtung befestigt, welche beispielsweise in einem aus dem Skisport bekannten Schlepplift bestehen kann. Auch auf anderen technischen Gebieten als dem Freizeitsport, wie in der Industrie, der Schifffahrt, der Logistik und ähnlichen ist ein Lösen von Seilverbindungen, während diese mit einer Zugkraft belastet sind von Interesse. Wesentlich bei derartigen Einsätzen ist es, dass die Seilverbindung jederzeit, und auch während diese mit einer hohen Zugkraft belastet ist, lösbar ist um möglichen Verletzungen vorzubeugen.

Im Stand der Technik sind verschiedene Vorrichtungen zum Lösen von mit einer Zugkraft belasteten Seilverbindungen bekannt.

Die WO 2014/177130 A1 offenbart eine Vorrichtung, welche einen Haken umfasst, von welchem ein Seil gehalten wird.

Die DE 33 07 151 A1 offenbart eine Kupplungsvorrichtung für eine Tierleine, welche einen Betätigungskörper und ein scherenartiges Klemmelement zum Klemmen eines Seilendes umfasst, welches mittels des Betätigungselements geöffnet und geschlossen werden kann.

Das Dokument DE 195 29 266 A1 offenbart eine Einhängekupplung für eine Seilverbindung in Kombination mit einem Bügel für Schlepplifte. Die Einhängekupplung umfasst eine Schließe mit welcher eine Seilschlaufe gebildet werden kann und damit eine lösbare Verbindung zwischen den Bügel und einem Snowboardfahrer hergestellt werden kann. Hierbei wird ein lösbares Seilende in eine Schließe eingelegt. Insbesondere bei steilen Steigungen wirken immense Zugkräfte auf die Schließe und dem Seil der Seilschlaufe. Die in DE 195 29 266 A1 offenbarte Vorrichtung umfasst ein Verriegelungsteil, welches in einem Gehäuse verschiebbar gelagert ist, und ein Seilende im Betrieb einquetscht. Bei hohen Zugkräften wirken hohe Quetschkräfte auf das Seilende und in weitere Folge auf das Verriegelungsteil. Es hat sich als Nachteil erwiesen, dass die hohen Quetschkräfte hohe Reibungskräfte zwischen dem Seil und der Vorrichtung zur Folge haben. Diese sind nur schwer zu überwinden, wodurch ein sicheres Lösen der Seilschlaufe nicht sichergestellt ist.

Der Erfindung liegt die Aufgabe zugrunde eine Vorrichtung zum Lösen einer mit einer Zugkraft belasteten Seilverbindung bereitzustellen, welche ohne, oder mit nur sehr geringem Kraftaufwand durch einen Benutzer auch bei hohen auftretenden Zugkräften einfach und zuverlässig zu lösen ist.

Erfindungsgemäß wird diese Aufgabe durch die Bereitstellung einer Vorrichtung zum Lösen einer mit einer Zugkraft belasteten Seilverbindung mit den Merkmalen von Anspruch 1 gelöst.

Die erfindungsgemäße Vorrichtung zum Lösen einer mit einer Zugkraft belasteten Seilverbindung umfasst einen Betätigungskörper und einen Sperrkörper. Der Betätigungskörper ist entlang des Sperrkörpers zwischen einem geschlossenen Zustand und einem offenen Zustand der Vorrichtung verschiebbar. Der Sperrkörper umfasst ein Klemmelement, und zwischen dem Klemmelement und dem Betätigungskörper ist ein Klemmbereich zur Aufnahme eines ersten Seilendes der Seilverbindung ausgebildet. Der Klemmbereich ist im geschlossenen Zustand kleiner als in dem offenen Zustand. Der Sperrkörper ist dazu ausgebildet im geschlossenen Zustand der Vorrichtung die Zugkraft der Seilverbindung aufzunehmen, und der Betätigungskörper gleitet entlang des Sperrkörpers zwischen dem geschlossenen Zustand und dem offenen Zustand der Vorrichtung frei von der Zugkraft der Seilverbindung.

Durch den erfindungsgemäßen Aufbau der Vorrichtung wird der Vorteil erreicht, dass in keinem Betriebszustand der Vorrichtung die Zugkraft, welche auf die Seilverbindung wirkt, auf den Betätigungskörper übertragen wird. Hierdurch wird zur Manipulation des Betätigungskörpers, und somit zum Lösen der Seilverbindung nur ein sehr geringer Kraftaufwand benötigt. Zudem wird hierdurch verhindert, dass eine zu hohe Zugkraft dazu führt, dass die Vorrichtung nicht mehr lösbar ist. Die erfindungsgemäße Vorrichtung bietet hierdurch eine hohe Betriebssicherheit und eine einfache Bedienbarkeit.

Gemäß einer bevorzugten Ausführungsform der erfindungsgemäßen Vorrichtung umfasst der Betätigungskörper und/oder der Sperrkörper einen ersten Anschlag und/oder einen zweiten Anschlag, wobei der Sperrkörper und/oder der Betätigungskörper im geschlossenen Zustand der Vorrichtung an dem ersten Anschlag und in dem offenen Zustand der Vorrichtung an dem zweiten Anschlag anliegt. Hierdurch wird der Vorteil erreicht, dass die Abmessungen des Klemmbereichs im geschlossenen Zustand vordefiniert sind, und die Vorrichtung nicht über den geschlossenen Zustand oder den offenen zustand hinaus beweglich ist. Hierdurch wird eine Fehlbedienung der Vorrichtung vermieden. Vorzugsweise umfasst der Betätigungskörper zumindest ein Langloch, und der Sperrkörper einen, durch das zumindest eine Langloch verlaufenden Bolzen. Der erste Anschlag und der zweite Anschlag sind hierbei durch jeweils ein Ende des Langlochs gebildet. Gemäß einer alternativen Ausführungsvarianten umfasst der Sperrkörper zumindest ein Langloch, und der Betätigungskörper einen, durch das zumindest eine Langloch verlaufenden Bolzen, wobei der erste Anschlag und der zweite Anschlag durch jeweils ein Ende des Langlochs gebildet sind. Hierdurch werden eine einfach zu konstruierende und robuste Möglichkeiten bereitgestellt, den ersten Anschlag und den zweiten Anschlag auszuführen.

Gemäß der bevorzugten Ausführungsform der erfindungsgemäßen Vorrichtung umfasst die Vorrichtung ein, mit dem Betätigungskörper und dem Sperrkörper verbundenes Vorspannelement, wobei das Vorspannelement dazu ausgebildet ist, den Betätigungskörper mittels einer Vorspannkraft in den geschlossenen Zustand zu verlagern. Hierdurch wird sichergestellt, dass die erfindungsgemäße Vorrichtung nicht unbeabsichtigt geöffnet wird.

Vorzugsweise umfasst das Klemmelement eine drehbare Klemmhülse. Hierdurch wird das Lösen der Seilverbindung beim Versetzen der Vorrichtung vom geschlossenen Zustand in den offenen Zustand erleichtert, da die Reibung des Seils am Klemmelement durch die Klemmhülse reduziert wird.

Gemäß einer Ausführungsvariante der erfindungsgemäßen Vorrichtung weist der Sperrkörper eine erste Aufnahme zur Aufnahme eines Befestigungselements auf. Hierdurch wird der Vorteil erreicht, dass der Sperrkörper beispielsweise mit einem Sportgerät starr verbunden werden kann.

Vorzugsweise weist der Betätigungskörper eine zweite Aufnahme zur Aufnahme eines Sicherungsseils, einer Sicherungskette, eines Auslöseseils und/oder einer Auslösekette auf. Durch das Auslöseseil und/oder die Auslösekette wird der Vorteil erreicht, dass diese mit einem Benutzer der Vorrichtung verbunden werden kann, wodurch ein automatisches Öffnen der Vorrichtung erreicht wird, sollte sich der Benutzer von der Vorrichtung beispielsweise im Fall eines Sturzes entfernen.

Vorzugsweise umfasst die erfindungsgemäße Vorrichtung ein erstes Seil zur Herstellung der Seilverbindung, welches das erste Seilende aufweist. Das erste Seil umfasst zudem vorzugsweise ein zweites Seilende, wobei das zweite Seilende mit dem Sperrkörper verbunden ist. Das erste Seilende und/oder das zweite Seilende weisen zudem gemäß der bevorzugten Ausführungsvariante einen Seilknoten und/oder eine Querschnittsverdickung auf. Hierdurch wird eine sichere Verankerung der Seilverbindung in der erfindungsgemäßen Vorrichtung erreicht.

Gemäß einer alternativen Ausführungsvariante der erfindungsgemäßen Vorrichtung umfasst die Vorrichtung ein, mit dem Sperrkörper verbundenes Totmannseil oder eine mit dem Sperrkörper verbundene Totmannkette. Der Betätigungskörper umfasst hierbei in einem dem Klemmbereich im Wesentlichen gegenüberliegenden Bereich des Betätigungskörpers einen Umlaufbolzen, wobei das Totmannseil oder die Totmannkette den Umlaufbolzen zumindest teilweise umläuft, und aus dem Betätigungskörper in einem Bereich zwischen dem Sperrkörper und dem Umlaufbolzen austritt. Diese Ausführungsvariante stellt den Vorteil bereit, dass ein Benutzer der Vorrichtung einen kontinuierlichen Zug auf das Totmannseil oder die Totmannkette ausüben muss, damit sich die Vorrichtung nicht selbstständig öffnet und die Seilverbindung löst. Vorzugsweise ist gemäß dieser Ausführungsvariante ein zweites Seilende der Seilverbindung mit dem Umlaufbolzen verbunden, oder mittels des Umlaufbolzens an dem Betätigungskörper eingeklemmt.

Vorteilhafte Ausgestaltungen der erfindungsgemäßen Vorrichtung sowie alternative Ausführungsvarianten werden in weiterer Folge anhand der Figuren näher erläutert.
Figur 1a und Figur 1b zeigen die erfindungsgemäße Vorrichtung in einem offenen Zustand in einer perspektivischen Ansicht.
Figur 2a und Figur 2b zeigen die erfindungsgemäße Vorrichtung in einem geschlossenen Zustand in einer perspektivischen Ansicht.
Figur 3a zeigt einen Querschnitt durch die erfindungsgemäße Vorrichtung im offenen Zustand.
Figur 3b zeigt einen Querschnitt durch die erfindungsgemäße Vorrichtung im geschlossenen Zustand.
Figur 4a zeigt eine alternative Ausführungsvariante der erfindungsgemäßen Vorrichtung in einer perspektivischen Ansicht.
Figur 4b zeigt einen Schnitt durch die in Figur 4a dargestellte Vorrichtung.
Figur 5a bis Figur 5d zeigen die erfindungsgemäße Vorrichtung in einem an einer Rodel angebrachten Zustand.

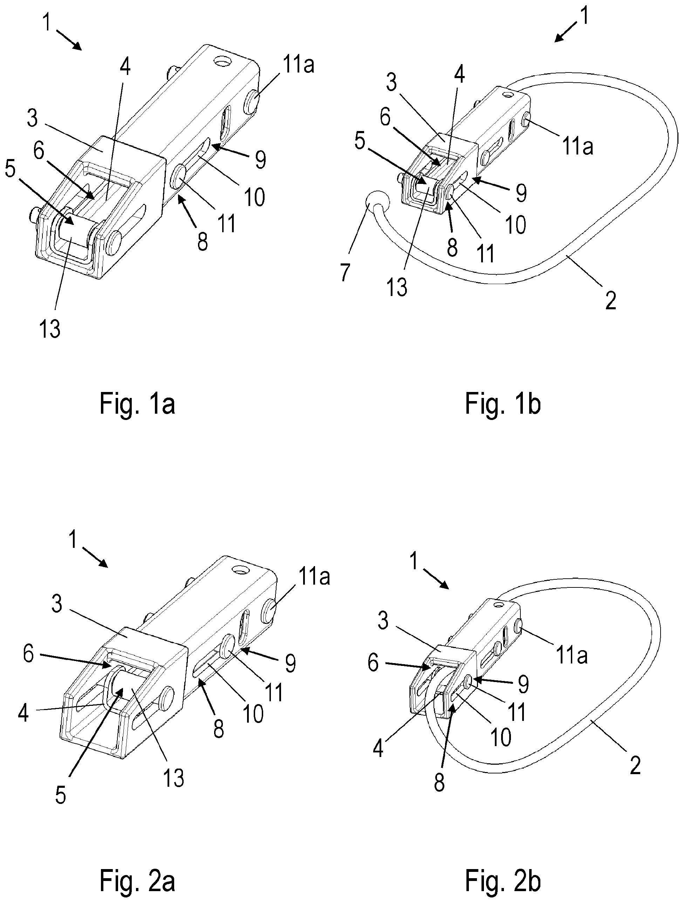

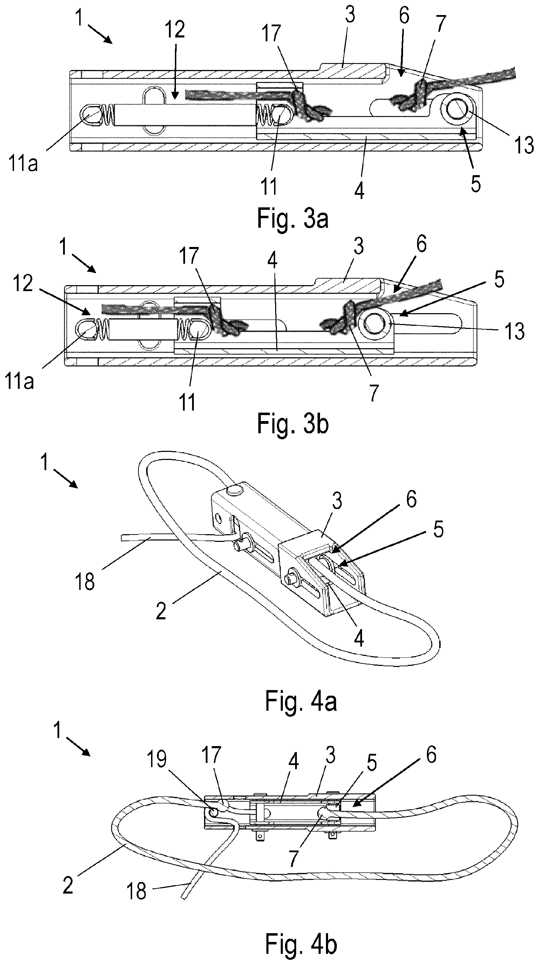

Die erfindungsgemäße Vorrichtung 1 zum Lösen einer mit einer Zugkraft belasteten Seilverbindung 2 ist in Figur 1a und Figur 1b in einem offenen Zustand dargestellt, in welchem die Seilverbindung 2 gelöst ist. Die Vorrichtung 1 umfasst einen Betätigungskörper 3 und einen Sperrkörper 4. Der Betätigungskörper 3 ist entlang des Sperrkörpers 4 zwischen einem in Figur 2a und Figur 2b dargestellten, geschlossenen Zustand und dem in Figur 1a und Figur 1b ersichtlichen offenen Zustand der Vorrichtung 1 verschiebbar. Die Figur 3a zeigt einen Querschnitt durch die erfindungsgemäße Vorrichtung 1 im geschlossenen Zustand, und die Figur 3b zeigt einen Querschnitt durch die erfindungsgemäße Vorrichtung 1 im offenen Zustand. Der Betätigungskörper 3 und der Sperrkörper 4 können beispielsweise in der Form von geschlossenen oder an einer oder mehreren Seiten geöffneten Profilen, vorzugsweise U-Profilen, hergestellt sein, welche beispielsweise mittels eines Rohrlasers, oder additiven Fertigungsverfahren wie 3D-Druck erzeugt werden können. Gemäß der bevorzugten Ausführungsform der erfindungsgemäßen Vorrichtung 1 ist der Sperrkörper 4 in dem Betätigungsköper 3 zumindest teilweise aufgenommen. Der Sperrkörper 4 umfasst zudem ein Klemmelement 5. Dieses kann beispielsweise wie in den Figuren dargestellt als Niete oder Bolzen ausgeführt sein. Zwischen dem Klemmelement 1 und dem Betätigungskörper 3 ist ein Klemmbereich 6 zur Aufnahme eines ersten Seilendes 7 der Seilverbindung 2 ausgebildet. In Figur 2b und in Figur 3b ist das erste Seilende 7 in dem Klemmbereich 6 im geschlossenen Zustand der Vorrichtung 1 aufgenommen dargestellt. In Figur 3a ist das erste Seilende 7 in die Vorrichtung 1 im offenen Zustand eingelegt dargestellt. Wird die Vorrichtung 1 geschlossen, wird der Betätigungskörper 3 entlang des Sperrkörpers 4 vom offenen Zustand in den geschlossenen Zustand verschoben, wodurch das erste Seilende 7 im Klemmbereich 6 eingeklemmt wird. Wie in Figur 3a und Figur 3b ersichtlich ist erfolgt eine Fixierung des ersten Seilendes 7 in der erfindungsgemäßen Vorrichtung 1 im geschlossenen Zustand dadurch, dass der Klemmbereich 6 im geschlossenen Zustand kleiner als in dem offenen Zustand ist. Im geschlossenen Zustand der Vorrichtung 1 wirkt durch diesen erfindungsgemäßen Aufbau der Vorrichtung 1 die Zugkraft der Seilverbindung 2 rein auf den Sperrkörper 4, welcher dazu ausgebildet ist die Zugkraft der Seilverbindung 2 im geschlossenen Zustand aufzunehmen. Der Betätigungskörper 3 gleitet entlang des Sperrkörpers 4 zwischen dem geschlossenen Zustand und dem offenen Zustand der Vorrichtung 1 frei von der Zugkraft der Seilverbindung 2. Hierdurch wirken keine externen Kräfte auf den Betätigungskörper 3, welcher auch bei hohen Zugkräften einfach und ohne große Anstrengung bedienbar ist. Hierdurch wird verhindert, dass die erfindungsgemäße Vorrichtung 1 im geschlossenen Zustand verbleibt und sich nicht mehr öffnen lässt, sobald die Zugkraft einen gewissen Wert übersteigt.

Der Betätigungskörper 3 und/oder der Sperrkörper 4 weisen vorzugsweise einen ersten Anschlag 8 und/oder einen zweiten Anschlag 9 auf. Der Sperrkörper 4 und/oder der Betätigungskörper 3 liegen im geschlossenen Zustand der Vorrichtung 1 an dem ersten Anschlag 8, und im offenen Zustand der Vorrichtung 1 an dem zweiten Anschlag 9 an. Hierdurch wird eine maximale und eine minimale Größe des Klemmbereichs 6 vorgegeben. Wie in den Figuren ersichtlich werden der erste Anschlag 8 und der zweite Anschlag 9 vorzugsweise durch Langlöcher 10, und darin verschiebbar gelagerte Bolzen 11 gebildet. Gemäß der in den Figuren dargestellten, bevorzugten Ausführungsvariante der erfindungsgemäßen Vorrichtung 1 umfasst der Betätigungskörper 3 ein Langloch 10, und der Sperrkörper 4 einen durch das Langloch 10 in dem Betätigungskörper 3 verlaufenden Bolzen 11, wobei der erste Anschlag 8 und der zweite Anschlag 9 durch jeweils ein Ende des Langlochs 10 gebildet sind. Die erfindungsgemäße Vorrichtung 1 kann vorzugsweise zumindest teilweise mittels additiven Fertigungsverfahren wie 3D-Druckverfahren, oder unter der Verwendung von Rohrlasern hergestellt werden.

Alternativ, hierzu kann auch der Sperrkörper 4 zumindest ein Langloch 10, und der Betätigungskörper 6 einen, durch das zumindest eine Langloch 10 verlaufenden Bolzen 11 umfassen, wobei der erste Anschlag 8 und der zweite Anschlag 9 durch jeweils ein Ende des Langlochs 10 gebildet sind.

Es ist auch eine Kombination dieser beiden angeführten Varianten von Langlöchern 10 und Bolzen 11 im Betätigungsköper 3 und Sperrkörper 4 möglich um den ersten Anschlag 8 und den zweiten Anschlag 9 zu bilden.

Gemäß der bevorzugten Ausführungsvariante der erfindungsgemäßen Vorrichtung 1 umfasst die Vorrichtung 1 ein in den Figuren 3a und 3b ersichtliches Vorspannelement 12. Das Vorspannelement 12 ist mit dem Betätigungskörper 3 und dem Sperrkörper 4 verbunden, und über eine Vorspannkraft auf den Betätigungskörper 3 aus, um diesen in den geschlossenen Zustand zu verlagern. Das Vorspannelement 12 ist vorzugsweise als Feder ausgeführt. Weitere Ausführungsvarianten eines Vorspannelements 12 sind dem Fachmann allgemein bekannt. Das Vorspannelement 12 reduziert die Wahrscheinlichkeit, dass die Vorrichtung 1 unbeabsichtigt geöffnet, und die Seilverbindung gelöst wird. In den Figuren 3a und 3b ist auch ersichtlich, dass das Klemmelement 5 in der bevorzugten Ausführungsvariante der erfindungsgemäßen Vorrichtung 1 eine drehbare Klemmhülse 13 umfasst. Die Klemmhülse 13 kann beispielsweise als drehbare Hülse über einem als Bolzen ausgeführt sein, um das Klemmelement 5 zu bilden. Hierdurch wird das Lösen der Seilverbindung beim Versetzen der Vorrichtung 1 vom geschlossenen Zustand in den offenen Zustand erleichtert, da die Reibung des Seils am Klemmelement 5 durch die Klemmhülse 13 reduziert wird.

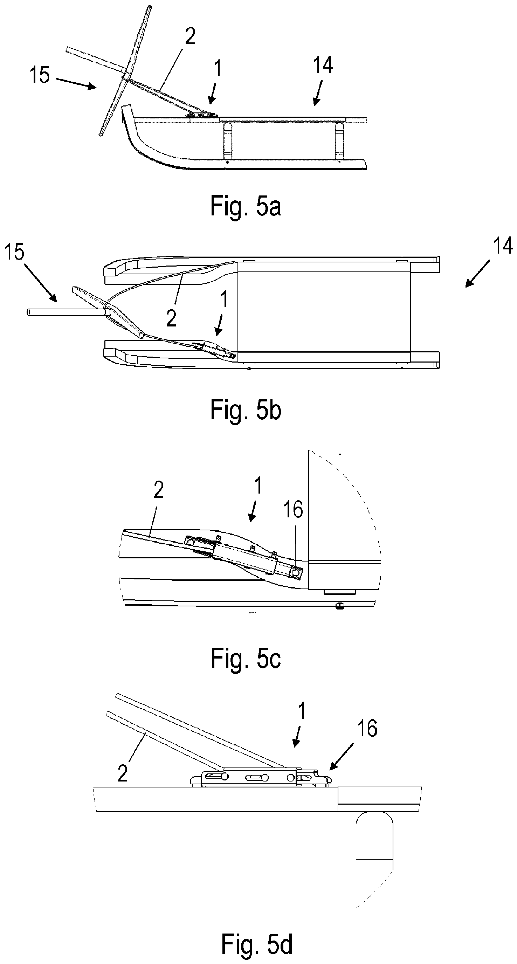

Figur 5a bis Figur 5c zeigen die erfindungsgemäße Vorrichtung 1 in einem an einer Rodel 14 montierten Zustand. In der in den Figur 5a bis Figur 5c gezeigten Konfiguration kann die Seilverbindung, wie in Figur 5a und Figur 5b ersichtlich, dazu genutzt werden, die Rodel 14 mit einem Bügel 15 eines Schlepplifts zu verbinden, um die Rodel 14 mittels des Schlepplifts zu befördern. Figur 5c und Figur 5d zeigen jeweils Detailausschnitte der Rodel 14 mit der daran angebrachten erfindungsgemäßen Vorrichtung 1. Hierzu weist der Sperrköper 4 der Vorrichtung 1 eine erste Aufnahme 16 zur Aufnahme eines Befestigungselements auf. Das Befestigungselement kann beispielsweise in einer Schraube oder einer Niete bestehen, welche die Vorrichtung 1 mit der Rodel 14 verbindet. Alternativ kann der Sperrkörper 4 beispielsweise mit der Rodel 14 starr verschweißt sein. Diese Verbindungsmethoden bieten den Vorteil, dass ein Benutzer der Vorrichtung 1 nicht darauf achten muss, dass die Vorrichtung 1 mit der Seilverbindung 2 von der der Rodel 13 während des Transports abrutscht. Anstatt der Rodel 14 kann die Vorrichtung 1 auch beispielsweise mit einem Schlitten, einem Fahrrad, einem Dreirad, einem Buggy oder ähnlichen Transportgeräten, Freizeitgeräten oder Sportgeräten verbunden sein. In dieser Ausführungsvariante der erfindungsgemäßen Vorrichtung 1 erstreckt sich der Sperrkörper 4 vorzugsweise an beiden Enden der Vorrichtung 1 über den Betätigungskörper 3 hinaus, und ist vorzugsweise beidseitig mittels jeweils einer Schraube mit der Rodel 13 verbunden. Damit der Betätigungskörper 3 frei entlang des Sperrkörpers 4 verschiebbar ist, sind vorzugsweise zwischen dem Sperrkörper 4 und der Konstruktion der Rodel 14 Unterlegscheiben vorgesehen

Gemäß einer in den Figuren nicht dargestellten Ausführungsvariante kann der Betätigungskörper 3 eine zweite Aufnahme zur Aufnahme eines Sicherungsseils, einer Sicherungskette, eines Auslöseseils und/oder einer Auslösekette aufweisen. Durch das Auslöseseil und/oder die Auslösekette wird der Vorteil erreicht, dass diese mit einem Benutzer der Vorrichtung 1 verbunden werden kann, wodurch ein automatisches Öffnen der Vorrichtung 1 erreicht wird, sollte sich der Benutzer von der Vorrichtung 1 beispielsweise im Fall eines Sturzes entfernen. Vorzugsweise ist das Auslöseseil und/oder die Auslösekette oder auch eine Auslöseschnur an einem dem Klemmbereich 6 gegenüberliegenden Ende der Vorrichtung 1 mit dem mit dem Betätigungskörper 3 verbunden. Hierzu kann wie in den Figuren 1a bis 3b ersichtlich an diesem Ende der Vorrichtung 1 ein zusätzlicher Bolzen 11a vorgesehen sein. Zudem kann das Vorspannelement 12 ebenfalls über den zusätzlichen Bolzen 11a mit dem Betätigungskörper 3, und über einen Bolzen 11 mit dem Sperrkörper 4 verbunden sein.

Vorzugsweise umfasst die Vorrichtung 1 ein erstes Seil, zur Herstellung der Seilverbindung 2. Das erste Seil weist das erste Seilende 7 auf. Das erste Seil kann zudem auch ein zweites Seilende 17 umfassen, welches mit dem Sperrkörper 4 verbunden ist. Diese ist in Figur 3a und Figur 3b ersichtlich. Alternativ hierzu kann das zweite Seilende 17 auch Teil eines zweiten Seils sein, wobei das zweite Seilende 17 mit dem Sperrkörper 4 verbunden ist. Hierdurch lässt sich eine Seilverbindung 2 aus mehreren Seilen herstellen. Wie in den Figuren dargestellt, weisen das erste Seilende 7 und/oder das zweite Seilende 17 eine Querschnittsverdickung und/oder einen Seilknoten auf. Hierdurch wird eine Klemmung des ersten Seilendes 7 beziehungsweise des zweiten Seilendes 17 vereinfacht.

In den Figuren 4a und 4b ist eine weitere Ausführungsvariante der erfindungsgemäßen Vorrichtung 1 dargestellt. Gemäß dieser Ausführungsvariante umfasst die Vorrichtung ein mit dem Sperrkörper 4 verbundenes Totmannseil 18, oder eine mit dem Sperrkörper verbundene Totmannkette. Der Betätigungskörper 3 umfasst in einem dem Klemmbereich 6 im Wesentlichen gegenüberliegenden Bereich des Betätigungskörpers 3 einen Umlaufbolzen 19. Das Totmannseil 18 oder die Totmannkette umläuft, wie in Figur 4b ersichtlich, den Umlaufbolzen 19 zumindest teilweise, und tritt aus dem Betätigungskörper 3 in einem Bereich zwischen dem Sperrkörper 4 und dem Umlaufbolzen 19 aus. Diese Ausführungsvariante stellt den Vorteil bereit, dass ein Benutzer der Vorrichtung 1 einen kontinuierlichen Zug auf das Totmannseil 18 oder die Totmannkette ausüben muss, damit sich die Vorrichtung 1 nicht selbstständig öffnet und die Seilverbindung 2 löst. Vorzugsweise ist gemäß dieser Ausführungsvariante ein zweites Seilende 17 der Seilverbindung 2 mit dem Umlaufbolzen 19 verbunden, oder mittels des Umlaufbolzens 19 an dem Betätigungskörper 3 eingeklemmt. Somit funktioniert die Vorrichtung 1 im Totmannprinzip, d.h. das Totmannseil 18 muss aktiv durch, z.B. den Benutzer, gespannt werden, andernfalls geht die Vorrichtung 1 durch die Zugkraft der Seilverbindung 2 selbstständig in den offenen Zustand über. Durch die Umschlingung des Umlaufbolzens 19 und dem Verlauf des Totmannseils 18 aus dem Betätigungskörper 3 heraus, entstehen hohe Seilreibungskräfte und die notwendige Haltekraft, zum Halten im geschlossenen Zustand, wird somit erheblich verringert. Durch die Zugkraft des zweiten Seilendes 17 welche auf den Umlaufbolzen 19 wirkt, wird dieser in seiner Verdrehung blockiert und erst so treten hohe Seilreibungskräfte am Umlaufbolzen 19 auf. Vorzugsweise weist die Vorrichtung 1 gemäß dieser Ausführungsvariante ebenfalls ein wie oben beschriebenes Vorspannelement 12 auf.

## Patentansprüche

1. Vorrichtung (1) zum Lösen einer mit einer Zugkraft belasteten Seilverbindung (2), umfassend einen Betätigungskörper (3) und einen Sperrkörper (4),
wobei der Betätigungskörper (3) entlang des Sperrkörpers (4) zwischen einem geschlossenen Zustand und einem offenen Zustand der Vorrichtung (1) verschiebbar ist, und der Sperrkörper (4) ein Klemmelement (5) umfasst,
und zwischen dem Klemmelement (5) und dem Betätigungskörper (3) ein Klemmbereich (6) zur Aufnahme eines ersten Seilendes (7) der Seilverbindung (2) ausgebildet ist, und der Klemmbereich (6) im geschlossenen Zustand kleiner als in dem offenen Zustand ist, wobei der Sperrkörper (4) dazu ausgebildet ist, im geschlossenen Zustand der Vorrichtung (1) die Zugkraft der Seilverbindung (2) aufzunehmen, und der Betätigungskörper (3) entlang des Sperrkörpers (4) zwischen dem geschlossenen Zustand und dem offenen Zustand der Vorrichtung (1) frei von der Zugkraft der Seilverbindung (2) gleitet.

2. Vorrichtung (1) gemäß Anspruch 1, **dadurch gekennzeichnet, dass** der Betätigungskörper (3) und/oder der Sperrkörper (4) einen ersten Anschlag (8) und/oder einen zweiten Anschlag (9) umfasst, wobei der Sperrkörper (4) und/oder der Betätigungskörper (3) im geschlossenen Zustand der Vorrichtung (1) an dem ersten Anschlag (8) und in dem offenen Zustand der Vorrichtung (1) an dem zweiten Anschlag (9) anliegt.

3. Vorrichtung (1) gemäß Anspruch 2, **dadurch gekennzeichnet, dass** der Betätigungskörper (3) zumindest ein Langloch (10), und der Sperrkörper (4) einen, durch das zumindest eine Langloch (10) verlaufenden Bolzen (11) umfasst, wobei der erste Anschlag (8) und der zweite Anschlag (9) durch jeweils ein Ende des Langlochs (10) gebildet sind.

4. Vorrichtung (1) gemäß Anspruch 2, **dadurch gekennzeichnet, dass** der Sperrkörper (4) zumindest ein Langloch (10), und der Betätigungskörper (3) einen, durch das zumindest eine Langloch (10) verlaufenden Bolzen (11) umfasst, wobei der erste Anschlag (8) und der zweite Anschlag (9) durch jeweils ein Ende des Langlochs (10) gebildet sind.

5. Vorrichtung (1) gemäß einem der Ansprüche 1 bis 4, **dadurch gekennzeichnet, dass** die Vorrichtung (1) ein, mit dem Betätigungskörper (3) und dem Sperrkörper (4) verbundenes Vorspannelement (12) umfasst, wobei das Vorspannelement (12) dazu ausgebildet ist, den Betätigungskörper (3) mittels einer Vorspannkraft in den geschlossenen Zustand zu verlagern.

6. Vorrichtung (1) gemäß einem der Ansprüche 1 bis 5, **dadurch gekennzeichnet, dass** das Klemmelement (5) eine drehbare Klemmhülse (13) umfasst.

7. Vorrichtung (1) gemäß einem der Ansprüche 1 bis 6, **dadurch gekennzeichnet, dass** der Sperrkörper (4) eine erste Aufnahme (16) zur Aufnahme eines Befestigungselements aufweist.

8. Vorrichtung (1) gemäß einem der Ansprüche 1 bis 7, **dadurch gekennzeichnet, dass** der Betätigungskörper (3) eine zweite Aufnahme zur Aufnahme eines Sicherungsseils, einer Sicherungskette, eines Auslöseseils und/oder einer Auslösekette aufweist.

9. Vorrichtung (1) gemäß einem der Ansprüche 1 bis 8, **dadurch gekennzeichnet, dass** die Vorrichtung (1) ein erstes Seil zur Herstellung der Seilverbindung (2) umfasst, welches das erste Seilende (7) aufweist.

10. Vorrichtung (1) gemäß Anspruch 9, **dadurch gekennzeichnet, dass** das erste Seil ein zweites Seilende (17) umfasst, wobei das zweite Seilende (17) mit dem Sperrkörper (4) verbunden ist.

11. Vorrichtung (1) gemäß Anspruch 9, **dadurch gekennzeichnet, dass** die Vorrichtung (1) ein zweites Seil umfasst, wobei das zweite Seil ein zweites Seilende (17) aufweist, welches mit dem Sperrkörper (4) verbunden ist.

12. Vorrichtung (1) gemäß einem der Ansprüche 9 bis 11, **dadurch gekennzeichnet, dass** das erste Seilende (7) und/oder das zweite Seilende (17) einen Seilknoten und/oder eine Querschnittsverdickung aufweist.

13. Vorrichtung (1) gemäß einem der Ansprüche 1 bis 9, **dadurch gekennzeichnet, dass** die Vorrichtung (1) ein, mit dem Sperrkörper (4) verbundenes Totmannseil (18) oder eine mit dem Sperrkörper (4) verbundene Totmannkette umfasst, und der Betätigungskörper (3) in einem dem Klemmbereich (6) im Wesentlichen gegenüberliegenden Bereich des Betätigungskörpers (3) einen Umlaufbolzen (19) umfasst, wobei das Totmannseil (18) oder die Totmannkette den Umlaufbolzen (19) zumindest teilweise umläuft, und aus dem Betätigungskörper (3) in einem Bereich zwischen dem Sperrkörper (4) und dem Umlaufbolzen (19) austritt.

14. Vorrichtung (1) gemäß Anspruch 13, **dadurch gekennzeichnet, dass** ein zweites Seilende (17) der Seilverbindung (2) mit dem Umlaufbolzen (19) verbunden ist, oder mittels des Umlaufbolzens (19) an dem Betätigungskörper (3) eingeklemmt ist.
